# EUROPEAN PATENT APPLICATION

(11) **EP 4 596 344 A1**
(43) Date of publication of application: **06.08.2025**
(21) Application number: 23881249.9
(22) Date of filing: 15.06.2023
(51) Int. Cl.: B60T 13/74, B60T 17/22, B60T 7/12

(54) **BRAKE SYSTEM OF VEHICLE, VEHICLE AND CONTROL METHOD**

(30) Priority: 27.10.2022 CN 202211326237
(71) Applicant: Shenzhen Yinwang Intelligent Technologies Co., Ltd., Shenzhen, Guangdong 518129 (CN)
(72) Inventor: JIN, Shaoxun, Shenzhen, Guangdong 518129 (CN); WANG, Zhao, Shenzhen, Guangdong 518129 (CN); CHEN, Chi, Shenzhen, Guangdong 518129 (CN)
(74) Representative: Maiwald GmbH
(86) International application number: PCT/CN2023/100477
(87) International publication number: WO 2024/087658

(57) **Abstract**

A vehicle brake system (10), a vehicle, and a control method are provided. The brake system (10) includes a main brake module (110) and a redundant brake module (120). When the main brake module (110) works normally and communication between the two modules (110 and 120) is normal, the main brake module (110) may detect a status of an electronic handbrake switch (130), control a first caliper actuator based on the status, and send a first control signal generated based on the status to the redundant brake module (120). The redundant brake module (120) may control a second caliper actuator based on the first control signal. When the main brake module (110) or the communication between the two modules (110 and 120) is abnormal, the redundant brake module (120) may detect the status of the electronic handbrake switch (130), and control the second caliper actuator based on the status.

## Description

### CROSS-REFERENCE TO RELATED APPLICATION

This application claims priority to Chinese Patent Application No. 202211326237.X, filed with the China National Intellectual Property Administration on October 27, 2022 and entitled "VEHICLE BRAKE SYSTEM, VEHICLE, AND CONTROL METHOD", which is incorporated herein by reference in its entirety.

### TECHNICAL FIELD

This application relates to the field of vehicle control technologies, and in particular, to a vehicle brake system, a vehicle, and a control method.

### BACKGROUND

Currently, mainstream vehicle brands gradually replace a conventional mechanical handbrake lever with an electronic handbrake switch. Application of the electronic handbrake switch saves more space in a vehicle, and provides passengers with more convenient and efficient brake experience. A vehicle brake system controls a corresponding caliper actuator by detecting a status of the electronic handbrake switch, to perform parking brake on the vehicle.

In a related technology, a dual electronic control unit (electronic control unit, ECU) redundant brake system is used to implement the parking brake of the vehicle. Each ECU controls one brake module. Two brake modules each detect the status of the electronic handbrake switch. The two brake modules alternately collect related information about the status of the electronic handbrake switch. In an alternate collection process, each brake module needs to notify the other brake module after completing collection, so that the other brake module starts collection after receiving the notification. Frequent alternate processes increase complexity in a process of data exchange between ECUs. In addition, the collection processes of the two brake modules are completely independent, and utilization of the brake system is low.

### SUMMARY

This application provides a vehicle brake system, a vehicle, and a control method, to reduce complexity in a process of data exchange in the vehicle brake system, and improve utilization of the brake system.

According to a first aspect, an embodiment of this application provides a vehicle brake system. The system includes a main brake module and a redundant brake module. When the main brake module works normally and communication between the main brake module and the redundant brake module is normal, the main brake module may be configured to detect a status of an electronic handbrake switch, and control a first caliper actuator of a vehicle based on the status of the electronic handbrake switch. The main brake module may further be configured to send a first control signal representing the status of the electronic handbrake switch to the redundant brake module. The redundant brake module may further be configured to control a second caliper actuator of the vehicle based on the first control signal. When the main brake module works abnormally or the communication between the main brake module and the redundant brake module is abnormal, the redundant brake module is further configured to: detect the status of the electronic handbrake switch, and control the second caliper actuator of the vehicle based on the detected status of the electronic handbrake switch.

In the foregoing brake system, brake in two different cases is implemented. In one case, the main brake module works normally and the communication between the main brake module and the redundant brake module is normal. In this case, after detecting the status of the electronic handbrake switch, the main brake module controls the first caliper actuator of the vehicle based on the status of the electronic handbrake switch. In addition, the first control signal is generated based on the status of the electronic handbrake switch, and the first control signal is sent to the redundant brake module. The redundant brake module controls the second caliper actuator of the vehicle based on the first control signal. As described above, the redundant brake module does not need to detect the status of the switch, and may learn the status of the electronic handbrake switch by receiving the first control signal, to control the second caliper actuator based on the status of the electronic handbrake switch. In the other case, when the main brake module works abnormally or the communication between the main brake module and the redundant brake module is abnormal, the redundant brake module detects the status of the electronic handbrake switch, and controls the second caliper actuator of the vehicle based on the detected status of the electronic handbrake switch. The redundant brake module does not need to rely on the main brake module, and may detect the status of the electronic handbrake switch to implement brake. Complexity in a process of data exchange between the main brake module and the redundant brake module is reduced, and utilization of the brake system is improved.

In some possible designs, the redundant brake module may include a first micro control unit and a switch detection circuit. The first micro control unit may be configured to: when the main brake module works abnormally or the communication between the main brake module and the redundant brake module is abnormal, send a detection control signal to the switch detection circuit. The switch detection circuit may be configured to: in response to the detection control signal, detect the status of the electronic handbrake switch.

In the foregoing brake system, the first micro control unit of the redundant brake module may monitor the receiving status of the first control signal from the main brake module. When the main brake module works abnormally or the communication between the main brake module and the redundant brake module is abnormal, the first micro control unit cannot receive the first control signal, and therefore the status of the electronic handbrake switch cannot be learned by using the first control signal. The first micro control unit sends the detection control signal to the switch detection circuit, to detect the status of the electronic handbrake switch by using the switch detection circuit. In this design, when the main brake module works abnormally or the communication between the main brake module and the redundant brake module is abnormal, the redundant brake module does not need to rely on the main brake module, and detects the status of the electronic handbrake switch.

In some possible designs, the redundant brake module may further include a service brake controller. The service brake controller may be configured to control the second caliper actuator under an indication of the first micro control unit.

In the foregoing brake system, in a service brake scenario, the service brake controller may detect a status of a service brake switch, and then control a service brake caliper actuator based on the status of the service brake switch. In a scenario in which parking brake is performed by using the electronic handbrake switch, the service brake controller may further control the second caliper actuator based on the indication of the first micro control unit. As described above, in the parking brake scenario, a brake function in the service brake process is reused, so that new components are reduced, and complexity in a process of a brake system structure is reduced.

In some possible designs, the main brake module may include a second micro control unit. The second micro control unit is in a communication connection to the first micro control unit. The second micro control unit may be configured to send the first control signal through the communication connection.

In the foregoing brake system, the second micro control unit may send the first control signal to the redundant brake module through the communication connection between the first micro control unit and the second micro control unit. In this design, the redundant brake module may determine the status of the electronic handbrake switch by using the first control signal from the main brake module, to control the second caliper actuator.

In some possible designs, the main brake module may further include a parking brake chip. The parking brake chip may be configured to: detect the status of the electronic handbrake switch, and control the first caliper actuator based on the status of the electronic handbrake switch.

In the foregoing brake system, the main brake module may detect the status of the electronic handbrake switch in a software detection manner by using a built-in parking brake chip, and control the first caliper actuator based on the status of the electronic handbrake switch.

In some possible designs, the main brake module may further include a first caliper drive circuit. The first caliper drive circuit may be configured to control, under an indication of the second micro control unit, the first caliper actuator of the vehicle based on the status of the electronic handbrake switch.

In the foregoing brake system, the main brake module may indicate the first caliper drive circuit by using the second micro control unit, to accurately control the first caliper actuator.

In some possible designs, the redundant brake module further includes a second caliper drive circuit. The second caliper drive circuit may be configured to control, under the indication of the first micro control unit, the second caliper actuator of the vehicle based on the status of the electronic handbrake switch.

In the foregoing brake system, the main brake module may indicate the second caliper drive circuit by using the first micro control unit, to accurately control the second caliper actuator.

In some possible designs, the main brake module further includes a second electronic control unit. The second micro control unit is disposed in the second electronic control unit. The redundant brake module further includes a first electronic control unit. The first micro control unit is disposed in the first electronic control unit.

In the foregoing brake system, the micro control unit is disposed in the electronic control unit, to reduce data exchange between the micro control unit and the electronic control unit. In addition, space required for hardware layout is saved.

In some possible designs, the first control signal may include a control instruction determined based on the status of the electronic handbrake switch.

In the foregoing brake system, the main brake module sends the first control signal to the redundant brake module. The first control signal includes the control instruction determined based on the status of the electronic handbrake switch. The redundant brake module receives the first control signal, and may identify the first control signal to learn the status of the electronic handbrake switch, to control the second caliper actuator.

In some possible designs, the electronic handbrake switch may include a first interface, a second interface, a third interface, and a fourth interface. The switch detection circuit may include a first switch processing circuit, a second switch processing circuit, a third switch processing circuit, and a fourth switch processing circuit.

An input end of the first switch processing circuit may be connected to the first interface, and an output end of the first switch processing circuit may be connected to a first control end of the first micro control unit. An input end of the second switch processing circuit may be connected to the second interface, and an output end of the second switch processing circuit may be connected to a second control end of the first micro control unit. An input end of the third switch processing circuit may be connected to the third interface, and an output end of the third switch processing circuit may be connected to a third control end of the first micro control unit. The third switch processing circuit may be configured to be connected under control of a high-level signal. An input end of the fourth switch processing circuit is connected to the fourth interface, and the output end of the third switch processing circuit may be connected to a fourth control end of the first micro control unit. The first micro control unit may further be configured to send a first detection control signal to the first switch processing circuit through the first control end, may further be configured to send a second detection control signal to the second switch processing circuit through the second control end, and may further be configured to send a fourth detection control signal to the fourth switch processing circuit through the fourth control end.

In the foregoing brake system, each switch processing circuit in the switch detection circuit may be connected to each interface of the electronic handbrake switch. The third switch processing circuit does not need the detection control signal, and another switch processing circuit needs the detection control signal. The first micro control unit sends a corresponding detection control signal to another switch processing circuit other than the third switch processing circuit through each control end, so that the switch processing circuits cooperate to detect the status of the electronic handbrake switch.

In some possible designs, the output end of the first switch processing circuit may be a first sampling point. The output end of the second switch processing circuit may be a second sampling point. The output end of the third switch processing circuit may be a third sampling point. The brake system may further include a sampling module. The sampling module may be configured to perform sampling on the first sampling point, the second sampling point, and the third sampling point. The sampling module may further configured to send sampled voltages at the three sampling points to the first micro control unit.

In the foregoing brake system, the output end of each switch processing circuit may function as a sampling point. The sampling module of the brake system may perform sampling on the three sampling points, so that the first micro control unit determines the status of the electronic handbrake switch based on the sampled voltages at the three sampling points.

In some possible designs, the first micro control unit may further be configured to: in response to a change of a voltage range that corresponds to the status of the electronic handbrake switch and within which the sampled voltages at the first sampling point, the second sampling point, and the third sampling point in the switch detection circuit fall, update the status of the electronic handbrake switch.

In the foregoing brake system, different voltage ranges corresponding to different states of the electronic handbrake switch are preset. The first micro control unit may determine, based on the voltage range that corresponds to the status of the electronic handbrake switch and within which the voltages at the three sampling points fall, that the status of the electronic handbrake switch changes. In addition, it may also be convenient for a display module and the like of the vehicle to update displaying based on the changed status of the electronic handbrake switch.

In some possible designs, the electronic handbrake switch may include a first switch, a second switch, a third switch, and a fourth switch. The first switch is interlocked with the second switch. The third switch is interlocked with the fourth switch. The first interface may be connected to a first end of the first switch and a first end of the second switch. The second interface may be connected to a second end of the first switch and a first end of the third switch. The third interface may be connected to a second end of the third switch and a first end of the fourth switch. The fourth interface may be connected to a second end of the second switch and a second end of the fourth switch.

In the foregoing brake system, the first interface, the second interface, the third interface, and the fourth interface of the electronic handbrake switch may be determined based on an interlocking state and a connection relationship between the first switch, the second switch, the third switch, and the fourth switch. In this design, the switch detection circuit may be connected to the electronic handbrake switch by using each interface.

In some possible designs, the electronic handbrake switch may be in a default state. The first switch is turned off, the second switch is turned on, the third switch is turned on, and the fourth switch is turned off. The first switch processing circuit and the fourth switch processing circuit are connected, and the second switch processing circuit and the third switch processing circuit are connected.

In the foregoing brake system, the electronic handbrake switch is the default state. The first switch processing circuit and the fourth switch processing circuit are connected, and then are connected to the first micro control unit. The second switch processing circuit and the third switch processing circuit are connected, and then connected to the first micro control unit. In this case, the first micro control unit may learn the status of the electronic handbrake switch based on an output of each switch processing circuit.

In some possible designs, the electronic handbrake switch is in an active state. The first switch is turned on, the second switch is turned off, the third switch is turned on, and the fourth switch is turned off. The first switch processing circuit, the second switch processing circuit, and the third switch processing circuit are connected.

In the foregoing brake system, when the electronic handbrake switch is in the active state, the first switch processing circuit, the second switch processing circuit, and the third switch processing circuit are connected, and then connected to the first micro control unit. In this case, the first micro control unit may learn the status of the electronic handbrake switch based on an output of each switch processing circuit.

In some possible designs, the electronic handbrake switch is in a released state. The first switch is turned off, the second switch is turned on, the third switch is turned off, and the fourth switch is turned on. The first switch processing circuit, the third switch processing circuit, and the fourth switch processing circuit are connected.

In the foregoing brake system, when the electronic handbrake switch is in the released state, the first switch processing circuit, the third switch processing circuit, and the fourth switch processing circuit are connected, and then connected to the first micro control unit. In this case, the first micro control unit may learn the status of the electronic handbrake switch based on an output of each switch processing circuit.

According to a second aspect, an embodiment of this application provides a vehicle. The vehicle may include an electronic handbrake switch and the vehicle brake system according to the first aspect.

According to a third aspect, an embodiment of this application provides a vehicle brake method. The method may be applied to the vehicle brake system according to the first aspect. The vehicle brake system may include a main brake module and a redundant brake module. The control method may include: When the main brake module works normally and communication between the main brake module and the redundant brake module is normal, the main brake module may detect a status of an electronic handbrake switch, and control a first caliper actuator based on the status of the electronic handbrake switch. When the main brake module works abnormally or the communication between the main brake module and the redundant brake module is abnormal, the main brake module may send a first control signal to the redundant brake module, and the redundant brake module may control a second caliper actuator based on the first control signal.

### BRIEF DESCRIPTION OF DRAWINGS

FIG. 1 is a diagram of a structure of a vehicle brake system according to an embodiment of this application;
FIG. 2 is a diagram of a structure of another vehicle brake system according to an embodiment of this application;
FIG. 3 is a diagram of an internal structure of an electronic handbrake switch 130 in a default state according to an embodiment of this application;
FIG. 4 is a diagram of an internal structure of an electronic handbrake switch 130 in an active state according to an embodiment of this application;
FIG. 5 is a diagram of an internal structure of an electronic handbrake switch 130 in a released state according to an embodiment of this application;
FIG. 6 is a diagram of a detection principle of a switch detection circuit according to an embodiment of this application;
FIG. 7 is a diagram of a principle of a first switch processing circuit S0 according to an embodiment of this application;
FIG. 8 is a diagram of a principle of a second switch processing circuit S1 according to an embodiment of this application;
FIG. 9 is a diagram of a principle of a third switch processing circuit S2 according to an embodiment of this application;
FIG. 10 is a diagram of a principle of a fourth switch processing circuit S3 according to an embodiment of this application;
FIG. 11 is a diagram of a control principle of a vehicle brake system according to an embodiment of this application;
FIG. 12 is a diagram of a structure of a vehicle according to an embodiment of this application; and
FIG. 13 is a flowchart of a vehicle brake method according to an embodiment of this application.

### DESCRIPTION OF EMBODIMENTS

Currently, longitudinal control of a vehicle is mainly implemented through an accelerator pedal and a brake component. The brake component may include a service brake pedal and a mechanical handbrake lever. The service brake pedal and the accelerator pedal may be disposed on a floor of a driver's cabin, and an electronic handbrake switch may be disposed on a center console between a driver seat and a passenger seat.

For example, for an acceleration process of the vehicle, a user sends an acceleration instruction to an acceleration control module by using the accelerator pedal. The acceleration control module may identify a target speed represented by the acceleration instruction, to accelerate the vehicle. For a brake process of the vehicle, a brake function of a brake system mainly includes service brake and parking brake. A brake component in a service brake process may be the service brake pedal, and a brake component in a parking brake process may be the mechanical handbrake lever.

The service brake means that, in a traveling process of the vehicle, the service brake pedal is used to decelerate and stop the vehicle. The service brake pedal is a control apparatus of a service brake controller. There are four brake actuators for the service brake. Each brake actuator corresponds to one actuating component. A type of the actuating component is not limited. Each brake actuator and the actuating component controlled by the brake actuator are disposed on a corresponding wheel. For example, a service brake actuator and an actuating component controlled by the service brake actuator are disposed on a left front wheel, a service brake actuator and an actuating component controlled by the service brake actuator are disposed on a right front wheel, a service brake actuator and an actuating component controlled by the service brake actuator are disposed on a left rear wheel, and a service brake actuator and an actuating component controlled by the service brake actuator are disposed on a right rear wheel.

The parking brake means that, after the vehicle stops, the mechanical handbrake lever is used to stabilize the vehicle to prevent the vehicle from rolling away. Rolling away means that the vehicle moves backward when the vehicle is in a neutral gear, coasts with a clutch pressed, or starts on a slope. The mechanical handbrake lever provides resistance to the vehicle when the vehicle stops, locking a drive shaft or the rear wheels to cause the vehicle not to roll away. As a requirement for driving safety of the vehicle increases, a current parking brake technology evolves from mechanical parking brake implemented by using the mechanical handbrake lever in the past to current electronic parking brake implemented by using the electronic handbrake switch. A brake actuator for the parking brake is different from that for the service brake. There are two brake actuators for the parking brake. The parking brake actuator may be a caliper actuator, and an actuating component controlled by the caliper actuator is a caliper. The two caliper actuators and calipers controlled by the caliper actuators are respectively disposed on the left rear wheel and the right rear wheel. An ECU determines, based on status information about the electronic handbrake switch, whether to send an instruction to the caliper actuator, so that the caliper actuator controls, based on the instruction, the caliper to perform an action.

A status of the electronic handbrake switch may include a default state, an active state, and a released state. In the traveling process of the vehicle, the electronic handbrake switch is in the default state. After the vehicle stops, a driver operates the electronic handbrake switch to cause the electronic handbrake switch to be in the active state. The ECU sends a clamping instruction to each of the two caliper actuators, and the two caliper actuators control their respective calipers to clamp corresponding wheels, to implement parking brake. When the vehicle is started again, the driver operates the electronic handbrake switch to cause the electronic handbrake switch to be in the released state. In this case, the ECU sends a releasing instruction to each of the two caliper actuators, and the two caliper actuators control their respective calipers to release corresponding wheels, to release the parking brake.

The current driving system gradually develops toward intelligence and automation. This poses higher requirements for the brake system of the matching vehicle. For example, in a high-order autonomous driving system, requirements for the brake system are higher. For ease of applying the electronic parking brake to a brake driving system of a higher safety level, a redundant ECU solution is provided in a related technology. However, an existing dual ECU redundant brake system has the following problems.

In the dual ECU redundant brake system, each ECU controls one brake module. Two brake modules each detect a status of an electronic handbrake switch. The two brake modules alternately collect related information about the status of the electronic handbrake switch. In an alternate collection process, each brake module needs to notify the other brake module after completing collection, so that the other brake module starts collection after receiving the notification. Frequent alternate collection processes increase complexity in a process of data exchange between the ECUs. In addition, the collection processes of the two brake modules are completely independent, and utilization of the brake system is low.

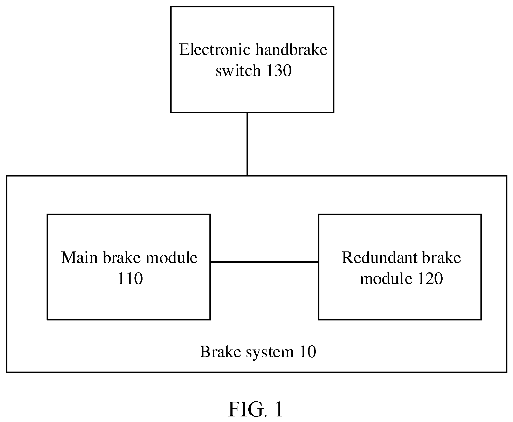

As shown in FIG. 1, an embodiment of this application provides a vehicle brake system. The brake system 10 includes a main brake module 110 and a redundant brake module 120. An electronic handbrake switch 130 is connected to both the main brake module 110 and the redundant brake module 120.

The main brake module 110 may include a second ECU. A second micro control unit 111 is disposed in the second ECU. The redundant brake module 120 further includes a first ECU. A first micro control unit 121 is disposed in the first ECU. The micro control unit is disposed in the corresponding ECU, so that layout space at a hardware level is saved, and other interference in data transmission between the ECU and the micro control unit is reduced. In a possible design, the main brake module 110 may be implemented as the second ECU, and the redundant brake module 120 may be implemented as the first ECU.

When the main brake module 110 works normally and communication between the main brake module 110 and the redundant brake module 120 is normal, the vehicle brake system detects a status of the electronic handbrake switch 130 by using the main brake module 110, and the main brake module 110 may control a first caliper actuator of a vehicle based on the detected status of the electronic handbrake switch 130. The main brake module 110 may send, to the redundant brake module 120, a first control signal determined based on the status of the electronic handbrake switch 130.

In this design, when the main brake module 110 works normally and the communication between the main brake module 110 and the redundant brake module 120 is normal, the main brake module 110 detects the status of the electronic handbrake switch 130, to implement brake control. The redundant brake module 120 does not need to detect the status of the electronic handbrake switch 130, and may receive a control signal from the main brake module 110 to control a second caliper actuator, improving a processing speed of the redundant brake module 120. For the vehicle brake system, when the main brake module 110 works normally and the communication between the main brake module 110 and the redundant brake module 120 is normal, the redundant brake module 120 skips a process of detecting the status of the electronic handbrake switch 130, improving brake efficiency and utilization of the brake system.

When the main brake module 110 works abnormally or the communication between the main brake module 110 and the redundant brake module 120 is abnormal, the redundant brake module 120 may further detect the status of the electronic handbrake switch 130, and control the second caliper actuator of the vehicle based on the detected status of the electronic handbrake switch 130.

In this design, when the main brake module 110 works abnormally or the communication between the main brake module 110 and the redundant brake module 120 is abnormal, the redundant brake module 120 may independently detect the status of the electronic handbrake switch 130. For the vehicle brake system, when the main brake module 110 works abnormally or the communication between the main brake module 110 and the redundant brake module 120 is abnormal, a parking brake function of the brake system is ensured. In addition, the brake system does not need to be configured with two main brake modules 110, reducing costs.

The vehicle brake system in this embodiment of this application may be used in a vehicle having a driving mobility function, or may be used in another intelligent terminal having a mobility control function other than the vehicle, or is disposed in the another intelligent terminal having a mobility control function other than the vehicle, or is disposed in a component of the intelligent terminal. The intelligent terminal may be an intelligent transportation device, a robot, or the like. For example, the intelligent terminal includes but is not limited to an intelligent terminal or another sensor such as a controller, a chip, a radar, or a camera in the intelligent terminal, another component, and the like.

It should be noted that, in embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for distinguishing between a plurality of objects, but are not intended to limit priorities or importance of the plurality of objects. For example, first indication information and second indication information are merely intended to distinguish between different indication information, but do not indicate different priorities, importance, or the like of the two pieces of indication information.

For ease of understanding, the following describes embodiments of this application with reference to the accompanying drawings.

Still refer to FIG. 1. The main brake module 110 may control the first caliper actuator, and the redundant brake module 120 may control the second caliper actuator. For example, both the first caliper actuator and the second caliper actuator are calipers that may be used for the parking brake, may be respectively disposed on a left rear wheel and a right rear wheel, and may be configured to control the calipers disposed on the left rear wheel and the right rear wheel to perform a clamping or releasing action. For example, the first caliper actuator is disposed on the left rear wheel, and may be configured to control a first caliper of the left rear wheel. The second caliper actuator is disposed on the right rear wheel, and may be configured to control a second caliper of the right rear wheel. The main brake module 110 and the redundant brake module 120 may be communicatively connected, and the main brake module 110 may send, to the redundant brake module 120, the first control signal determined based on the status of the electronic handbrake switch 130. Optionally, the redundant brake module 110 may send, to the main brake module 120, a feedback signal indicating that the first control signal is received.

In some embodiments, when the main brake module 110 works normally and the communication between the main brake module 110 and the redundant brake module 120 is normal, the main brake module 110 may detect the status of the electronic handbrake switch 130, and may control the first caliper actuator of the vehicle based on the detected status of the electronic handbrake switch 130.

The status of the electronic handbrake switch 130 may include a default state, an active state, and a released state. The default state is a state when no operation is performed on the electronic handbrake switch 130. The active state is a state when a brake disc is locked. The released state is a state when the brake disc is released. Usually, in a traveling process of the vehicle, the electronic handbrake switch 130 is in the default state. After the vehicle stops, the electronic handbrake switch 130 is in the active state. When the vehicle is started again, the electronic handbrake switch 130 is in the released state. For example, that the electronic handbrake switch 130 is in the default state indicates that the vehicle is traveling, and no operation is performed on the electronic handbrake switch 130. That the electronic handbrake switch 130 is in the active state indicates that a driver activates the electronic handbrake switch 130, and the vehicle has a parking brake requirement. The first caliper actuator of the vehicle may control the first caliper, to implement parking brake on the left rear wheel.

As described above, the main brake module 110 may normally detect the status of the electronic handbrake switch 130, and can normally perform data transmission with the redundant brake module 120. The main brake module 110 may further generate the first control signal based on the status of the electronic handbrake switch 130. The first control signal may be a control instruction determined based on the status of the electronic handbrake switch 130. The first control signal may be, for example, a voltage signal or a current signal. The control instruction is an enable instruction representing caliper control, for example, a caliper clamping instruction or a caliper releasing instruction. The main brake module 110 may further send the first control signal to the redundant brake module 120. The redundant brake module 120 may control the second caliper actuator of the vehicle based on the first control signal. For example, the redundant brake module 120 may identify the first control signal to determine that the received status of the electronic handbrake switch 130 is the active state, control the second caliper actuator of the vehicle based on the active state, and clamp the right rear wheel by using the second caliper controlled by the second caliper actuator.

In some other embodiments, when the main brake module 110 works abnormally or the communication between the main brake module 110 and the redundant brake module 120 is abnormal, the redundant brake module 120 may further detect the status of the electronic handbrake switch 130, and control the second caliper actuator of the vehicle based on the detected status of the electronic handbrake switch 130.

In a first case, the main brake module 110 is faulty. The status of the electronic handbrake switch 130 cannot be normally detected, and therefore the first control signal cannot be generated. In this case, the main brake module 110 cannot normally detect the status of the electronic handbrake switch 130, and therefore the first caliper actuator cannot be controlled.

In a second case, the main brake module 110 is not faulty. The main brake module 110 may normally detect the status of the electronic handbrake switch 130, and therefore the first control signal is generated. However, a problem occurs in a process of communication between the main brake module 110 and the redundant brake module 120, and therefore the redundant brake module 120 cannot receive the first control signal. In this case, the main brake module 110 may normally detect the status of the electronic handbrake switch 130, and therefore the first caliper actuator may be controlled. However, the redundant brake module 120 cannot receive the first control signal, and therefore the status of the electronic handbrake switch 130 cannot be obtained, and the second caliper actuator cannot be controlled.

Based on the foregoing two cases, if the redundant brake module 120 does not receive the first control signal within first duration, the second caliper actuator cannot be controlled based on the first control signal. The redundant brake module 120 may independently detect the status of the electronic handbrake switch 130, and control the second caliper actuator of the vehicle based on the detected status of the electronic handbrake switch 130. In this example, in the first case, when the main brake module 110 cannot control the first caliper actuator, the redundant brake module 120 may control the second caliper actuator. In the second case, when the main brake module 110 may control the first caliper actuator, but the redundant brake module 120 cannot receive the first control signal, the redundant brake module 120 may detect the status of the electronic handbrake switch 130, and control the second caliper actuator of the vehicle. This prevents the vehicle from rolling away, and improves security.

In some other embodiments, to improve diversity in a brake control process, when the redundant brake module 120 may receive the first control signal, or when the redundant brake module 120 cannot receive the first control signal, the main brake module 110 may actively switch to the redundant brake module 120 to complete brake. For example, the main brake module 110 sends a switching instruction to the redundant brake module 120 to implement switching.

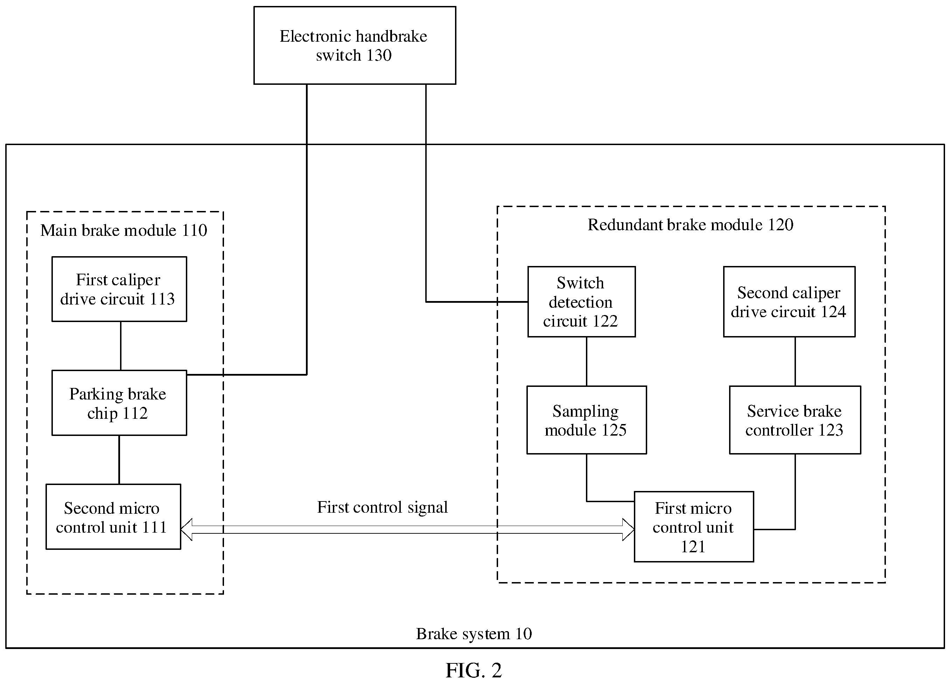

As shown in FIG. 2, based on the brake system provided in any one of the foregoing embodiments, the redundant brake module 120 may include a first micro control unit 121, a switch detection circuit 122, a service brake controller 123, a second caliper drive circuit 124, and a sampling module 125. The main brake module 110 may include a second micro control unit 111, a parking brake chip 112, and a first caliper drive circuit 113.

The switch detection circuit 122 may be configured to detect the status of the electronic handbrake switch 130. The first micro control unit 121 may be configured to control the switch detection circuit 122 to be in a working state, may further be configured to communicate with the main brake module 110, and may further be configured to control the second caliper actuator.

In some embodiments, when the main brake module 110 works abnormally or the communication between the main brake module 110 and the redundant brake module 120 is abnormal, that is, when the redundant brake module 120 does not receive the first control signal within the first duration, the first micro control unit 121 may send a detection control signal to the switch detection circuit 122. The switch detection circuit 122 may detect the status of the electronic handbrake switch 130 in response to the detection control signal.

In this example, the redundant brake module 120 may receive the first control signal from the main brake module 110 by using the first micro control unit 121. The first micro control unit 121 may send the detection control signal to the switch detection circuit 122 when the first control signal is not received within the first duration (which may be preset, for example, 5s). The detection control signal may be used to drive the switch detection circuit to work. After receiving the detection control signal, the switch detection circuit 122 may detect the status of the electronic handbrake switch 130. In a specific example, the detection control signal may be an enable signal or a high-level signal that is used to enable the switch detection circuit to perform a detection function.

In some embodiments, the service brake controller 123 of the redundant brake module 120 may be configured to control the second caliper actuator under an indication of the first micro control unit 121.

For example, the service brake controller 123 may detect a status of a service brake switch in a driving process, and control, based on the status of the service brake switch, a service brake actuator to clamp or release a corresponding wheel, to implement service brake. However, during parking brake, the service brake controller 123 cannot detect the status of the electronic handbrake switch 130. During the parking brake, the service brake controller 123 may control the second caliper actuator under the indication of the first micro control unit 121.

In a specific example, the service brake controller 123 may control the second caliper actuator under the indication of the first micro control unit 121 by using the second caliper drive circuit 124. In another possible implementation, the second caliper drive circuit 124 may alternatively be disposed inside the service brake controller 123. This is not limited herein.

When the main brake module 110 works normally and the communication between the main brake module 110 and the redundant brake module 120 is normal, the redundant brake module 120 may receive the first control signal from the main brake module 110 by using the first micro control unit 121, to identify the status of the electronic handbrake switch 130. When the main brake module 110 works abnormally or the communication between the main brake module 110 and the redundant brake module 120 is abnormal, the redundant brake module 120 may detect the status of the electronic handbrake switch 130 by using the switch detection circuit 122 of the redundant brake module 120.

The first micro control unit 121 may receive the first control signal that is from the main brake module 110 and that represents the status of the electronic handbrake switch, or may indicate, based on the status of the electronic handbrake switch determined by the switch detection circuit 122 of the redundant brake module 120, the service brake controller 123 to control the second caliper actuator.

In this embodiment, no other control component needs to be additionally disposed, and the redundant brake module 120 may reuse a control function of the service brake controller 123. In other words, the service brake controller 123 may control the second caliper actuator under the indication of the first micro control unit 121, so that the second caliper actuator clamps or releases a corresponding wheel. Although brake is performed on all wheels in the service brake process, this example is intended to describe the redundant brake module 120 reusing some functions of the service brake controller 123. Therefore, the service brake process is not described.

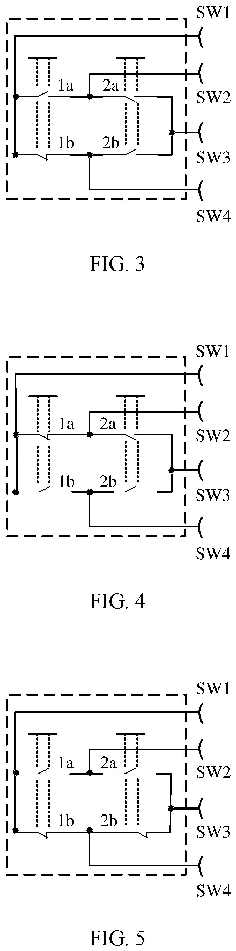

In a possible design, the switch detection circuit 122 may be connected to the electronic handbrake switch 130, and may be configured to detect the status of the electronic handbrake switch 130. To describe a connection relationship between the switch detection circuit 122 and the electronic handbrake switch 130, a structure of the electronic handbrake switch 130 is first described. FIG. 3 is a diagram of an internal structure of the electronic handbrake switch 130.

The electronic handbrake switch 130 may include a first switch 1a, a second switch 1b, a third switch 2a, and a fourth switch 2b. The first switch 1a is interlocked with the second switch 1b, that is, the first switch 1a and the second switch 1b are in different states at a same moment. For example, the first switch 1a is turned on, and the second switch 1b is turned off, or the first switch 1a is turned off, and the second switch 1b is turned on. The third switch 2a is interlocked with the fourth switch 2b, that is, the third switch 2a and the fourth switch 2b are in different states at a same moment. For example, the third switch 2a is turned on, and the fourth switch 2b is turned off, or the third switch 2a is turned off, and the fourth switch 2b is turned on.

The electronic handbrake switch 130 may externally include four interfaces: a first interface SW1, a second interface SW2, a third interface SW3, and a fourth interface SW4. The first interface SW1 is connected to a first end of the first switch 1a and a first end of the second switch 1b. The second interface SW2 is connected to a second end of the first switch 1a and a first end of the third switch 2a. The third interface SW3 is connected to a second end of the third switch 2a and a first end of the fourth switch 2b. The fourth interface SW4 is connected to a second end of the second switch 1b and a second end of the fourth switch 2b.

In an example, FIG. 3 shows that the electronic handbrake switch 130 is in a default state. The first switch 1a is turned off, the second switch 1b is turned on, the third switch 2a is turned on, and the fourth switch 2b is turned off.

In another example, FIG. 4 shows that the electronic handbrake switch 130 is in an active state. The first switch 1a is turned on, the second switch 1b is turned off, the third switch 2a is turned on, and the fourth switch 2b is turned off.

In still another example, FIG. 5 shows that the electronic handbrake switch 130 is in a released state. The first switch 1a is turned off, the second switch 1b is turned on, the third switch 2a is turned off, and the fourth switch 2b is turned on.

The electronic handbrake switch 130 may not have any high or low power excitation. Power excitation of the electronic handbrake switch 130 mainly comes from input of the first interface SW1, the second interface SW2, the third interface SW3, and the fourth interface SW4. A detection mechanism of the status of the electronic handbrake switch 130 may be that the switch detection circuit 122 provides excitation (a level signal) for each interface under the indication of the first micro control unit 121. The sampling module 125 may obtain output status information of the switch detection circuit 122, and send the output status information to the first micro control unit 121. The first micro control unit 121 may determine the status of the electronic handbrake switch 130 based on the output status information.

For example, when the main brake module 110 works abnormally or the communication between the main brake module 110 and the redundant brake module 120 is abnormal, the first micro control unit 121 may send a switch status detection instruction to the switch detection circuit 122. The switch detection circuit 122 may provide the level signal for the first interface SW1, the second interface SW2, the third interface SW3, and the fourth interface SW4.

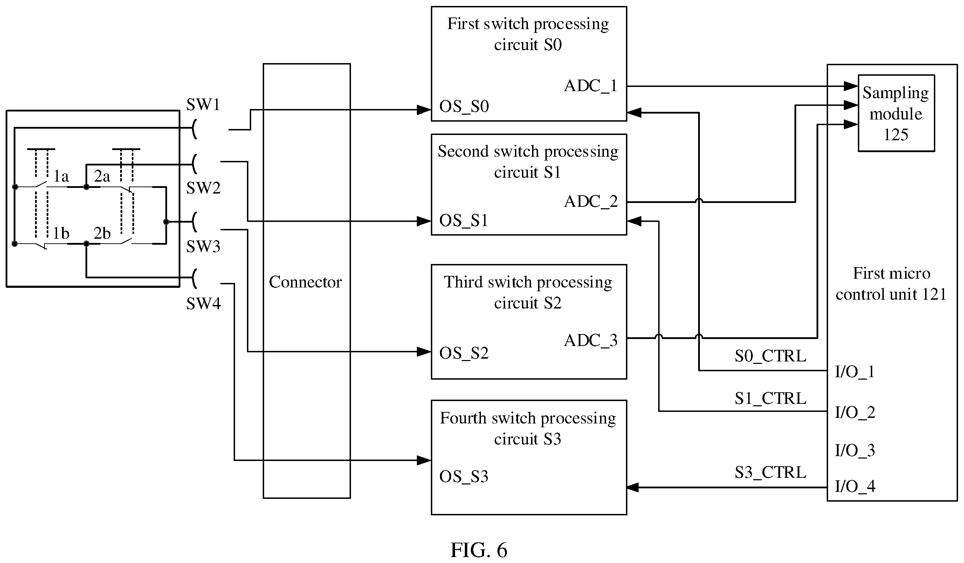

The switch detection circuit 122 may be any existing circuit that can detect the status of the electronic handbrake switch 130. This is not limited in embodiments of this application. As shown in FIG. 6, an embodiment of this application further provides the switch detection circuit 122, configured to detect the status of the electronic handbrake switch 130.

In a possible design, as shown in FIG. 6, the switch detection circuit 122 may include a first switch processing circuit S0, a second switch processing circuit S1, a third switch processing circuit S2, and a fourth switch processing circuit S3. Structures of and a connection relationship between switch processing circuits are as follows.

An input end OS_S0 of the first switch processing circuit S0 may be connected to the first interface SW1, and an output end of the first switch processing circuit S0 may be connected to a first control end I/O_1 of the first micro control unit 121. An input end OS_S1 of the second switch processing circuit S1 may be connected to the second interface SW2, and an output end of the second switch processing circuit S1 may be connected to a second control end IO_2 of the first micro control unit 121. An input end OS_S2 of the third switch processing circuit S2 may be connected to the third interface SW3, and an output end of the third switch processing circuit S2 may be connected to a third control end IO_3 of the first micro control unit 121. An input end OS_S3 of the fourth switch processing circuit S3 may be connected to the fourth interface SW4, and the output end of the third switch processing circuit S2 may be connected to a fourth control end IO_4 of the first micro control unit 121.

The first micro control unit 121 may further be configured to send a first detection control signal S0_CTRL to the first switch processing circuit S0 through the first control end I/O_1, send a second detection control signal S1_CTRL to the second switch processing circuit S1 through the second control end I/O_2, and send a fourth detection control signal S3_CTRL to the fourth switch processing circuit S3 through the fourth control end I/O_4.

The third switch processing circuit S2 may be configured to be connected under control of the high-level signal. The first switch processing circuit S0, the second switch processing circuit S1, and the fourth switch processing circuit S3 may be configured to be connected under control of the high-level signal and the detection control signal. The third switch processing circuit S2 may be any one of the four switch processing circuits. This is merely an example for description herein, and does not constitute a specific limitation.

Any one of the first switch processing circuit S0, the second switch processing circuit S1, and the fourth switch processing circuit S3 is used as an example. For example, for the first switch processing circuit S0, the first switch processing circuit S0 can be normally connected only after receiving the first detection control signal. A condition under which the first micro control unit 121 may send the first detection control signal is that the first micro control unit 121 does not receive the first control signal within the first duration. In other words, the redundant brake module 120 may detect the status of the electronic handbrake switch 130 by using the switch detection circuit 122 of the redundant brake module 120. The third switch processing circuit S2 does not need to receive the detection control signal, and can be connected with the high-level signal of the circuit.

In an example, the default state of the electronic handbrake switch 130 is used as an example for description of the turn-on states of the first switch 1a, the second switch 1b, the third switch 2a, and the fourth switch 2b of the electronic handbrake switch 130 in FIG. 6.

In a possible design, the sampling module 125 in the redundant brake module 120 may perform sampling on a first sampling point, a second sampling point, and a third sampling point. The output end of the first switch processing circuit S0 may be the first sampling point, the output end of the second switch processing circuit S1 may be the second sampling point, and the output end of the third switch processing circuit S2 may be the third sampling point. The sampling module 125 may further be configured to send sampled voltages at the three sampling points to the first micro control unit 121.

The sampling module 125 may be a functional module inside the first micro control unit 121, and may be configured to perform sampling on each sampling point. In addition, the sampling module 125 may further be a functional module independent of the first micro control unit 121, and may be configured to perform sampling on each sampling point.

In a possible design, the first micro control unit 121 may further: in response to a change of a voltage range that corresponds to the status of the electronic handbrake switch 130 and within which the sampled voltages at the first sampling point, the second sampling point, and the third sampling point in the switch detection circuit 122 fall, update the status of the electronic handbrake switch 130.

The first micro control unit may receive the sampled voltages, sent by the sampling module, at the three sampling points. A voltage range corresponding to the status of the electronic handbrake switch 130 is preset in the first micro control unit. For example, in the default state, a corresponding voltage range is F1 (V1-V2); in the active state, a corresponding voltage range is F2 (V3-V4); and in the released state, a corresponding voltage range is F3 (V5-V6). Therefore, after receiving the voltages at the three sampling points, the first micro control unit 121 may determine a voltage range corresponding to the three voltages to determine the status of the electronic handbrake switch 130. For example, the first micro control unit may determine a change between the voltage range that corresponds to the three voltages and a voltage range determined at a previous moment, to determine that the status of the electronic handbrake switch 130 changes, for example, switches from the default state to the active state.

For example, the first micro control unit 121 may update the status of the electronic handbrake switch 130, and send the updated status of the electronic handbrake switch 130 to an ECU connected to the redundant brake module 120. The ECU connected to the redundant brake module 120 may send the updated status of the electronic handbrake switch 130 to a display module of the vehicle. The display module may update, based on the updated status of the electronic handbrake switch 130, a display icon representing the status of the electronic handbrake switch 130, and the like. For example, an icon corresponding to the updated status of the electronic handbrake switch 130 is displayed on a display of a center console, to remind the driver.

As shown in FIG. 6, based on the brake system provided in any one of the foregoing embodiments, it can be learned that the electronic handbrake switch 130 is in the default state. The first switch 1a is turned off, the second switch 1b is turned on, the third switch 2a is turned on, and the fourth switch 2b is turned off. The first switch processing circuit S0 and the fourth switch processing circuit S3 are connected, and the second switch processing circuit S1 and the third switch processing circuit S2 are connected.

The first interface SW1 and the fourth interface SW4 are connected, and the second interface SW2 and the third interface SW3 are connected. In this case, the first switch processing circuit S0 and the fourth switch processing circuit S3 are connected to form a closed loop. The second switch processing circuit S1 and the third switch processing circuit S2 are connected to form a closed loop.

As shown in FIG. 6, based on the brake system provided in any one of the foregoing embodiments, it can be learned that the electronic handbrake switch 130 is in the active state. The first switch 1a is turned on, the second switch 1b is turned off, the third switch 2a is turned on, and the fourth switch 2b is turned off. The first switch processing circuit S0, the second switch processing circuit S1, and the third switch processing circuit S2 are connected.

The first interface SW1, the second interface SW2, and the third interface SW3 are connected, and the fourth interface SW4 is independent, that is, the fourth interface SW4 is in a disconnected state. In this case, the first switch processing circuit S0, the second switch processing circuit S1, and the third switch processing circuit S2 are connected to form a closed loop. The fourth switch processing circuit S3 is independent and in a disconnected state.

As shown in FIG. 6, based on the brake system provided in any one of the foregoing embodiments, it can be learned that the electronic handbrake switch 130 is in a released state. The first switch 1a is turned off, the second switch 1b is turned on, the third switch 2a is turned off, and the fourth switch 2b is turned on. The first switch processing circuit S0, the third switch processing circuit S2, and the fourth switch processing circuit S3 are connected.

The second interface SW2, the third interface SW3, and the fourth interface SW4 are connected, and the first interface SW1 is independent, that is, the first interface SW1 is in a disconnected state. In this case, the first switch processing circuit S0, the third switch processing circuit S2, and the fourth switch processing circuit S3 are connected to form a closed loop. The second switch processing circuit S1 is independent, that is, in a disconnected state.

Based on the brake system provided in any one of the foregoing embodiments, structures of the first switch processing circuit S0, the second switch processing circuit S1, the third switch processing circuit S2, and the fourth switch processing circuit S3 are as follows.

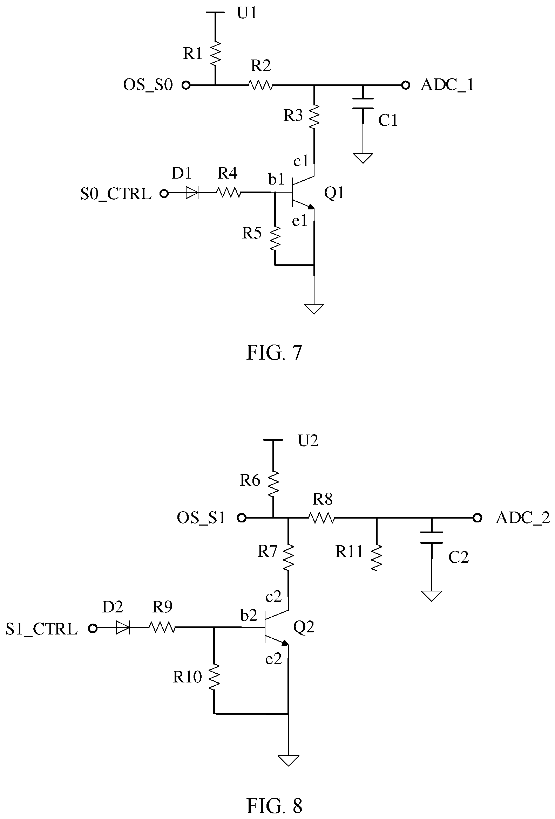

As shown in FIG. 7, the first switch processing circuit S0 may include a first resistor R1, a second resistor R2, a third resistor R3, a fourth resistor R4, a fifth resistor R5, a first capacitor C1, a first transistor Q1, and a first diode D1.

A first end of the first resistor R1 is connected to a first power supply end U1. A second end of the first resistor R1 is connected to a first end of the second resistor R2. A second end of the second resistor R2 is connected to a first end of the third resistor R3. A second end of the third resistor R3 is connected to a collector b1 of the first transistor Q1. A first end of the fourth resistor R4 is connected to a cathode of the first diode D1. A second end of the fourth resistor R4 is connected to a first end of the fifth resistor R5 and a base b1 of the first transistor Q1. A second end of the fifth resistor R5 is connected to an emitter e1 of the first transistor Q1. The emitter e1 of the first transistor Q1 is grounded. A first end of the first capacitor C1 is connected to the first end of the third resistor R3. A second end of the first capacitor C1 is grounded.

The second end of the first resistor R1, functioning as the input end OS_S0 of the first switch processing circuit S0, is connected to the first interface SW1 of the electronic handbrake switch 130. An anode of the first diode D1 is connected to the first control end I/O_1 of the first micro control unit 121. The first control end I/O_1 sends the first detection control signal S0_CTRL to the first switch processing circuit S0 under control of the first micro control unit 121. The first end of the first capacitor C1 is a first sampling point ADC_1.

As shown in FIG. 8, the second switch processing circuit S1 may include a sixth resistor R6, a seventh resistor R7, an eighth resistor R8, a ninth resistor R9, a tenth resistor R10, an eleventh resistor R11, a second capacitor C2, a second transistor Q2, and a second diode Q2.

A first end of the sixth resistor R6 is connected to a second power supply end U2. A second end of the sixth resistor R6 is connected to a first end of the seventh resistor R7 and a first end of the eighth resistor R8. A second end of the seventh resistor R7 is connected to a collector c2 of the second transistor Q2. A second end of the eighth resistor R8 is connected to a first end of the eleventh resistor R11 and a first end of the second capacitor C2. A second end of the eleventh resistor R11 is grounded. A second end of the second capacitor C2 is grounded. A first end of the ninth resistor R9 is connected to a cathode of the second diode D2. A second end of the ninth resistor R9 is connected to a first end of the tenth resistor R10 and a base b2 of the second transistor Q2. A second end of the tenth resistor R10 is connected to an emitter e2 of the second transistor Q2. The second end of the tenth resistor R10 is grounded.

The second end of the sixth resistor R6, functioning as the input end OS_S1 of the second switch processing circuit S1, is connected to the second interface SW2 of the electronic handbrake switch 130. An anode of the second diode D2 is connected to the second control end I/O_2 of the first micro control unit 121. The second control end I/O_2 sends the second detection control signal S1_CTRL to the second switch processing circuit S1 under control of the first micro control unit 121. The first end of the second capacitor C2 is a second sampling point ADC_2.

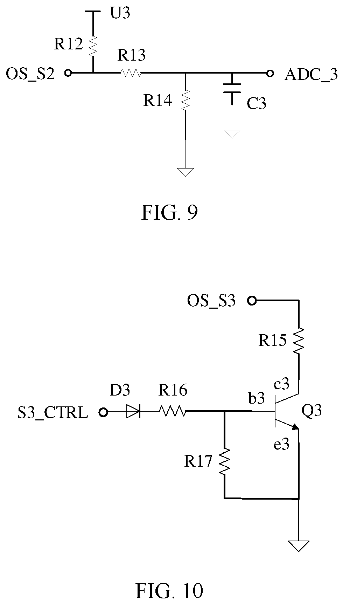

As shown in FIG. 9, the third switch processing circuit S2 may include a twelfth resistor R12, a thirteenth resistor R13, a fourteenth resistor R14, and a third capacitor C3. A first end of the twelfth resistor R12 is connected to a third power supply end U3. A second end of the twelfth resistor R12 is connected to a first end of the thirteenth resistor R13. A second end of the thirteenth resistor R13 is connected to a first end of the fourteenth resistor R14 and a first end of the third capacitor C3. A second end of the fourteenth resistor R14 is grounded. A second end of the third capacitor C3 is grounded.

The second end of the twelfth resistor R12, functioning as the input end OS_S2 of the third switch processing circuit S2, is connected to the third interface SW3 of the electronic handbrake switch 130. The first end of the third capacitor C3 is a third sampling point ADC_3.

As shown in FIG. 10, the third switch processing circuit S2 may include a fifteenth resistor R15, a sixteenth resistor R16, a seventeenth resistor R17, a third diode D3, and a third transistor Q3. A first end of the fifteenth resistor R15, functioning as the input end OS_S3 of the fourth switch processing circuit S3, is connected to the fourth interface SW4 of the electronic handbrake switch 130. A second end of the fifteenth resistor R15 is connected to a collector c3 of the third transistor Q3. A first end of the sixteenth resistor R16 is connected to a cathode of the third diode D3. A second end of the sixteenth resistor R16 is connected to a first end of the seventeenth resistor R17 and a base b3 of the third transistor Q3. An anode of the third diode D3 is connected to the fourth control end I/O_4 of the first micro control unit 121. The fourth control end I/O_2 sends the fourth detection control signal S3_CTRL to the fourth switch processing circuit S3 under control of the first micro control unit 121. A second end of the seventeenth resistor R17 is grounded. An emitter e3 of the third transistor Q3 is grounded.

In the foregoing example, there are three sampling points, namely the output ends of the first switch processing circuit S0, the second switch processing circuit S1, and the third switch processing circuit S2, respectively. In this case, no detection control signal needs to be disposed in the third switch processing circuit S2. The three detection control signals separately control the corresponding switch processing circuits S0, S1, and S3, and the switch processing circuit S2 that can run if a high-level signal is required, to implement sampling on the three sampling points. In addition, for another sampling point and setting of the detection control signal, the technical solutions that can implement this application are allowed. This is not limited herein.

In a possible design, the second micro control unit 111 in the main brake module 110 may be in a communication connection to the first micro control unit 121. When the main brake module 110 works normally and the communication between the main brake module 110 and the redundant brake module 120 is normal, the second micro control unit 111 may send the first control signal to the first micro control unit 121 through the communication connection. Data transmission between the main brake module 110 and the redundant brake module 120 is implemented.

In a possible design, when the main brake module 110 works normally and the communication between the main brake module 110 and the redundant brake module 120 is normal, the parking brake chip 112 in the main brake module 110 may detect the status of the electronic handbrake switch 130, and control the first caliper actuator based on the status of the electronic handbrake switch 130.

In this example, the parking brake chip 112 may detect the status of the electronic handbrake switch 130. For example, a status table corresponding to input and output is preconfigured in the parking brake chip 112. The parking brake chip 112 may poll the status table, to detect the status of the electronic handbrake switch 130. The parking brake chip 112 may control the first caliper actuator based on the status of the electronic handbrake switch 130.

In addition, the parking brake chip 112 needs excitation in a detection process of detecting the status of the electronic handbrake switch 130. The electronic handbrake switch 130 is connected to the main brake module 110 and the redundant brake module 120. If no processing is performed, there will be interference between high and low levels. Therefore, when the main brake module 110 detects the status of the electronic handbrake switch 130 by using the included parking brake chip 112, a connection between the electronic handbrake switch 130 and the switch detection circuit 122 of the redundant brake module 120 needs to be physically broken, to reduce impact caused by the redundant brake module 120. For example, a disconnection manner is that an input side of the detection circuit of the electronic handbrake switch 130 may be set to a disconnected state.

In a possible design, when the main brake module 110 works normally and the communication between the main brake module 110 and the redundant brake module 120 is normal, the first caliper drive circuit 113 in the main brake module 110 may control the first caliper actuator of the vehicle based on the status of the electronic handbrake switch 130 under the indication of the second micro control unit 111.

The second micro control unit 111 cannot directly control the first caliper actuator, but may control the first caliper actuator by using the control signal generated by the first caliper drive circuit 113 included in the main brake module 110.

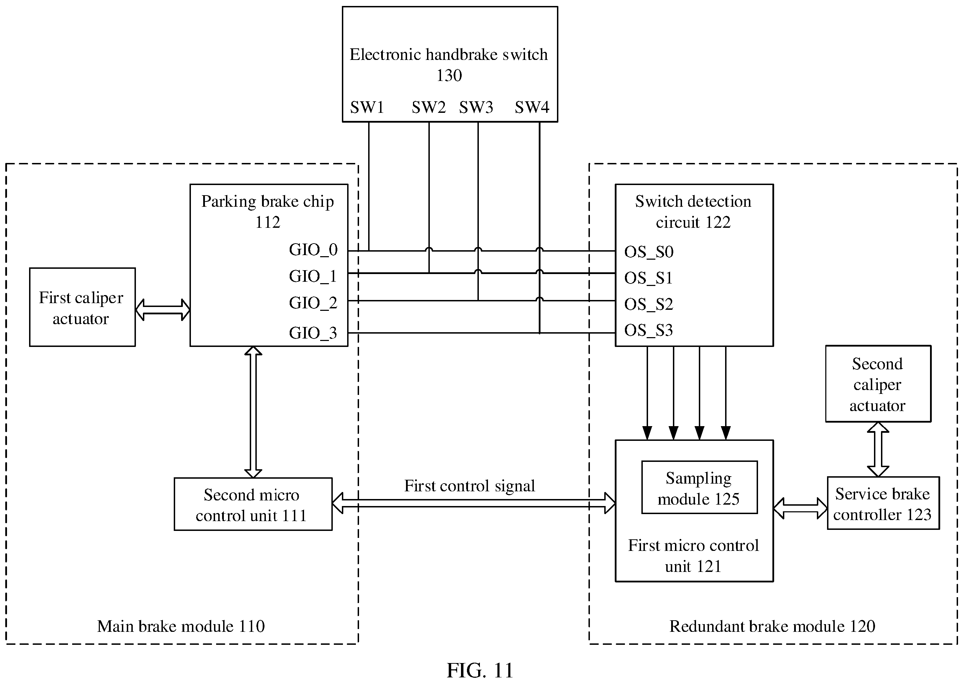

As shown in FIG. 11, to make the technical solutions of this application more complete, the following describes the technical solutions of embodiments of this application by using a complete diagram of a structure of a brake system.

The first interface SW1 of the electronic handbrake switch 130 may be connected to both a first end GIO_0 of the parking brake chip and the input end OS_S0 of the first switch processing circuit. The second interface SW2 of the electronic handbrake switch 130 may be connected to both a second end GIO_1 of the parking brake chip and the input end OS_S1 of the second switch processing circuit. The third interface SW3 of the electronic handbrake switch 130 may be connected to both a third end GIO_2 of the parking brake chip and the input end OS_S2 of the third switch processing circuit. The fourth interface SW4 of the electronic handbrake switch 130 may be connected to both a fourth end GIO_3 of the parking brake chip and the input end OS_S3 of the fourth switch processing circuit.

When the main brake module 110 can normally detect the status of the electronic handbrake switch 130, the main brake module 110 may detect the status of the electronic handbrake switch 130 by using the parking brake chip. The main brake module 110 may control the first caliper actuator by using the parking brake chip. The first caliper actuator performs a clamping or releasing action on the first caliper. In addition, the second micro control unit 111 may send, to the redundant brake module 120, the first control signal determined based on the status of the electronic handbrake switch 130. The first micro control unit 121 of the redundant brake module 120 may receive the first control signal, so that the second caliper actuator is controlled by using the service brake controller, and the second caliper actuator performs a clamping or releasing action on the second caliper. In this case, the first micro control unit 121 does not send the detection control signal to the switch detection circuit 122. Therefore, the redundant brake module 120 and the main brake module 110 are physically in a disconnected state, and no interference is caused to a process in which the parking brake chip detects the status of the electronic handbrake switch 130.

If the main brake module 110 is faulty, or a problem occurs in a process of communication between the main brake module 110 and the redundant brake module 120, the redundant brake module 120 does not receive the first control signal within the first duration. In this case, the first micro control unit 121 of the redundant brake module 120 sends the detection control signal to the switch detection circuit 122, and the switch detection circuit 122 detects the status of the electronic handbrake switch 130. The service brake controller 123 controls the second caliper actuator to perform a clamping or releasing action on the second caliper.

In the foregoing embodiments, when the main brake module 110 works abnormally or the communication between the main brake module 110 and the redundant brake module 120 is abnormal, the redundant brake module 120 does not need the parking brake chip, and may detect the status of the electronic handbrake switch 130 by using the switch detection circuit 122 in a hardware detection manner. In comparison with that both the two brake modules need the parking brake chip to detect the status of the electronic handbrake switch 130 in a software detection manner in the related technology, costs are reduced.

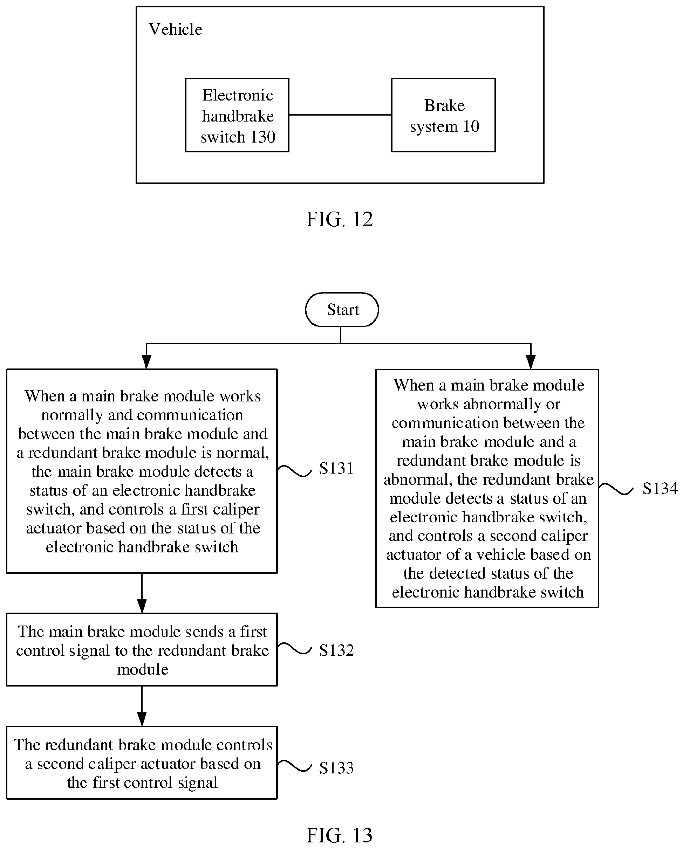

In some embodiments, as shown in FIG. 12, a vehicle is further provided. The vehicle may include an electronic handbrake switch 130 and the vehicle brake system 10 in any one of the foregoing embodiments. For a brake process of the vehicle brake system 10, refer to the foregoing embodiments. Details are not described herein.

In some embodiments, a vehicle brake method is further provided. The method may be applied to the vehicle brake system in any one of the foregoing embodiments. As shown in FIG. 13, the vehicle brake method includes at least the following steps.

S131: When a main brake module works normally and communication between the main brake module and a redundant brake module is normal, the main brake module detects a status of an electronic handbrake switch, and controls a first caliper actuator based on the status of the electronic handbrake switch.

S132: The main brake module sends a first control signal to the redundant brake module.

S133: The redundant brake module controls a second caliper actuator based on the first control signal.

S134: When the main brake module works abnormally or the communication between the main brake module and the redundant brake module is abnormal, the redundant brake module detects the status of the electronic handbrake switch, and controls the second caliper actuator of the vehicle based on the detected status of the electronic handbrake switch.

S131 to S133 are a brake process when the main brake module works normally and the communication between the main brake module and the redundant brake module is normal. S134 is a brake process when the main brake module works abnormally or the communication between the main brake module and the redundant brake module is abnormal. There is no necessary sequence between the two processes, and the two processes are merely examples for description herein.

For an implementation process of S131 to S134, refer to the brake process of the vehicle brake system. Details are not described herein.

It should be noted that, in embodiments of this application, division into the modules is an example and is merely logical function division, and may be other division in an actual implementation. Functional modules in embodiments of this application may be integrated into one processing module, or each of the modules may exist alone physically, or two or more modules are integrated into one module. The integrated module may be implemented in a form of hardware, or may be implemented in a form of a software functional module.

It is clear that, a person skilled in the art can make various modifications and variations to this application without departing from the scope of this application. This application is intended to cover these modifications and variations of this application provided that they fall within the scope of protection defined by claims and their equivalent technologies.

## Claims

1. A vehicle brake system, comprising a main brake module and a redundant brake module, wherein
when the main brake module works normally and communication between the main brake module and the redundant brake module is normal, the main brake module is configured to detect a status of an electronic handbrake switch, and control a first caliper actuator of a vehicle based on the status of the electronic handbrake switch, the main brake module is further configured to send a first control signal to the redundant brake module, and the redundant brake module is configured to control a second caliper actuator of the vehicle based on the first control signal; or
when the main brake module works abnormally or the communication between the main brake module and the redundant brake module is abnormal, the redundant brake module is further configured to: detect the status of the electronic handbrake switch, and control the second caliper actuator of the vehicle based on the detected status of the electronic handbrake switch.

2. The brake system according to claim 1, wherein the redundant brake module comprises a first micro control unit and a switch detection circuit, wherein
the first micro control unit is configured to: when the main brake module works abnormally or the communication between the main brake module and the redundant brake module is abnormal, send a detection control signal to the switch detection circuit; and
the switch detection circuit is configured to: in response to the detection control signal, detect the status of the electronic handbrake switch.

3. The brake system according to claim 1 or 2, wherein the redundant brake module further comprises a service brake controller, wherein
the service brake controller is configured to control the second caliper actuator under an indication of the first micro control unit.

4. The brake system according to any one of claims 1 to 3, wherein the main brake module comprises a second micro control unit, wherein
the second micro control unit is in a communication connection to the first micro control unit, and the second micro control unit is configured to send the first control signal through the communication connection.

5. The brake system according to any one of claims 1 to 4, wherein the main brake module further comprises a parking brake chip, wherein
the parking brake chip is configured to: detect the status of the electronic handbrake switch, and control the first caliper actuator based on the status of the electronic handbrake switch.

6. The brake system according to claim 4 or 5, wherein the main brake module further comprises a first caliper drive circuit, wherein the first caliper drive circuit is configured to control, under an indication of the second micro control unit, the first caliper actuator of the vehicle based on the status of the electronic handbrake switch.

7. The brake system according to any one of claims 2 to 6, wherein the redundant brake module further comprises a second caliper drive circuit, wherein the second caliper drive circuit is configured to control, under the indication of the first micro control unit, the second caliper actuator of the vehicle based on the status of the electronic handbrake switch.

8. The brake system according to any one of claims 4 to 7, wherein the main brake module further comprises a second electronic control unit, wherein the second micro control unit is disposed in the second electronic control unit; and
the redundant brake module further comprises a first electronic control unit, wherein the first micro control unit is disposed in the first electronic control unit.

9. The brake system according to any one of claims 1 to 8, wherein the first control signal comprises a control instruction determined based on the status of the electronic handbrake switch.

10. The brake system according to any one of claims 1 to 9, wherein the electronic handbrake switch comprises a first interface, a second interface, a third interface, and a fourth interface, and the switch detection circuit comprises a first switch processing circuit, a second switch processing circuit, a third switch processing circuit, and a fourth switch processing circuit, wherein
an input end of the first switch processing circuit is connected to the first interface, and an output end of the first switch processing circuit is connected to a first control end of the first micro control unit;
an input end of the second switch processing circuit is connected to the second interface, and an output end of the second switch processing circuit is connected to a second control end of the first micro control unit;
an input end of the third switch processing circuit is connected to the third interface, an output end of the third switch processing circuit is connected to a third control end of the first micro control unit, and the third switch processing circuit is configured to be connected under control of a high-level signal;
an input end of the fourth switch processing circuit is connected to the fourth interface, and the output end of the third switch processing circuit is connected to a fourth control end of the first micro control unit; and
the first micro control unit is further configured to send a first detection control signal to the first switch processing circuit through the first control end, send a second detection control signal to the second switch processing circuit through the second control end, and send a fourth detection control signal to the fourth switch processing circuit through the fourth control end.

11. The brake system according to claim 10, wherein the output end of the first switch processing circuit is a first sampling point, the output end of the second switch processing circuit is a second sampling point, and the output end of the third switch processing circuit is a third sampling point;
the brake system further comprises a sampling module, wherein the sampling module is configured to perform sampling on the first sampling point, the second sampling point, and the third sampling point; and
the sampling module is further configured to send sampled voltages at the three sampling points to the first micro control unit.

12. The brake system according to claim 11, wherein the first micro control unit is specifically configured to:
in response to a change of a voltage range that corresponds to the status of the electronic handbrake switch and within which the sampled voltages at the first sampling point, the second sampling point, and the third sampling point in the switch detection circuit fall, update the status of the electronic handbrake switch.

13. The brake system according to any one of claims 10 to 12, wherein the electronic handbrake switch comprises a first switch, a second switch, a third switch, and a fourth switch, the first switch is interlocked with the second switch, and the third switch is interlocked with the fourth switch;
the first interface is connected to a first end of the first switch and a first end of the second switch;
the second interface is connected to a second end of the first switch and a first end of the third switch;
the third interface is connected to a second end of the third switch and a first end of the fourth switch; and
the fourth interface is connected to a second end of the second switch and a second end of the fourth switch.

14. The brake system according to claim 13, wherein the electronic handbrake switch is in a default state, the first switch is turned off, the second switch is turned on, the third switch is turned on, the fourth switch is turned off, the first switch processing circuit and the fourth switch processing circuit are connected, and the second switch processing circuit and the third switch processing circuit are connected.

15. The brake system according to claim 13, wherein the electronic handbrake switch is in an active state, the first switch is turned on, the second switch is turned off, the third switch is turned on, the fourth switch is turned off, and the first switch processing circuit, the second switch processing circuit, and the third switch processing circuit are connected.

16. The brake system according to claim 13, wherein the electronic handbrake switch is in a released state, the first switch is turned off, the second switch is turned on, the third switch is turned off, the fourth switch is turned on, and the first switch processing circuit, the third switch processing circuit, and the fourth switch processing circuit are connected.

17. A vehicle, comprising:
an electronic handbrake switch; and
the vehicle brake system according to any one of claims 1 to 16.

18. A vehicle brake control method, applied to the vehicle brake system according to any one of claims 1 to 16, wherein the vehicle brake system comprises a main brake module and a redundant brake module, and the control method comprises:
when the main brake module works normally and communication between the main brake module and the redundant brake module is normal, detecting, by the main brake module, a status of an electronic handbrake switch, controlling a first caliper actuator of a vehicle based on the status of the electronic handbrake switch, and sending a first control signal to the redundant brake module; and controlling, by the redundant brake module, a second caliper actuator of the vehicle based on the first control signal; or
when the main brake module works abnormally or the communication between the main brake module and the redundant brake module is abnormal, detecting, by the redundant brake module, the status of the electronic handbrake switch, and controlling the second caliper actuator of the vehicle based on the detected status of the electronic handbrake switch.
